# EUROPÄISCHE PATENTANMELDUNG

(11) **EP 2 554 564 A1**
(43) Veröffentlichungstag der Anmeldung: **06.02.2013**
(21) Anmeldenummer: 11176718.2
(22) Anmeldetag: 05.08.2011
(51) Int. Cl.: C08G 65/00

(54) **Verfahren zur Herstellung eines Blockcopolymers**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zur Herstellung eines Blockcopolymers enthaltend Polyarylenether- und Polyalkylenoxid-Blöcke umfassend die Umsetzung eines HO-terminierten Polyarylenethers mit einem monomeren Alkylenoxid.

Auch betrifft die vorliegende Erfindung ein Blockcopolymer erhältlich aus diesem Verfahren.

Des Weiteren betrifft die Erfindung ein Triblockpolymer mit Polyalkylenoxid-Polyarylether-Polyalkylenoxid Blöcken ist.

## Beschreibung

Die vorliegende Erfindung betrifft ein Verfahren zur Herstellung eines Blockcopolymers enthaltend Polyarylenether- und Polyalkylenoxid-Blöcke umfassend die Umsetzung eines HO-terminierten Polyarylenethers mit einem monomeren Alkylenoxid.

Auch betrifft die vorliegende Erfindung ein Blockcopolymer erhältlich aus diesem Verfahren.

Des Weiteren betrifft die Erfindung ein Triblockpolymer mit Polyalkylenoxid-Polyarylether-Polyalkylenoxid Blöcken ist.

Die Erfindung betrifft auch eine Formmasse umfassend von 1 bis 60 Gew.-% mindestens eines Blockcopolymers enthaltend Polyarylenether und Polyalkylenoxid Blöcke.

Die Erfindung betrifft auch die Verwendung mindestens eines solchen Blockcopolymers oder einer Formmasse zur Herstellung von Beschichtungen, Folien, Fasern, Formteilen und/oder Membranen.

Die Erfindung betrifft Membranen enthaltend ein solches Blockcopolymer oder eine solche Formmasse.

Aus der Literatur sind Polyarylenether-Polyalkylenoxide bekannt. Sie gehören zur Klasse der hydrophil-hydrophoben Blockcopolymere, welche insbesondere im Bereich der Medizintechnik großes Anwendungspotential besitzen.

So beschreibt die US 5,700,902 die Synthese von Polyarylenether-Polyalkylenoxid-Copolymeren. Einerseits werden speziell modifizierte Polyalkylenoxid-Derivate als Regler in der Polykondensation von Bisphenolen und Dichlordiphenylsulfon verwendet oder aber es werden Polyalkylenoxide mit OH-Endgruppen als Comonomer in der Synthese der Polyarylenether eingesetzt.

Auch die US 5,798,437 beschriebt Copolymere Polyarylenether-Polyalkylenoxid Copolymere.

Gegenstand der US 5,911,880 sind Membranen, welche neben Polyarylenethern ein Blockcopolymer aus Polyarylenether und Polyalkylenoxid-Copolymeren zur Hydrophilierung aufweisen. Zur Strukturkontrolle werden aktivierte Polyalkylenoxide mit OH-oder NH₂-terminierten Polyarylenethern zur Reaktion gebracht.

Die EP 781795 beschreibt einen ähnlichen Ansatz zur Herstellung der Blockcopolymere wie die US 5,911,880. Hier werden Cl-terminierte Polyakylenoxide als Comonomer mit Dichlordiphenylsulfon und einem Diphenol unter Einwirkung von Pottasche zur Reaktion gebracht.

Auch die EP 739925 beschreibt Polyarylenether und Polyalkylenoxid-Copolymere.

Die in Macromolecules 29 (23) S. 7619 (1996) beschriebene Synthese von Polyarylenether-Polyalkylenoxid-Copolymeren erfordert hohe Reaktionszeiten.

Das Verfahren der DE 199 07 605 zeigt Produkte mit geringer Strukturkontrolle.

Es stellte sich somit die Aufgabe ein Verfahren zur Herstellung von Polyarylenether-Polyalkylenoxid-Blockcopolymeren zur Verfügung zu stellen, das Blockcopolymere mit einer engen Molekulargewichtsverteilung liefert. Zudem sollte eine Synthese zur Verfügung gestellt werden, die von Edukten ausgeht, die gut dosierbar und strukturell einfach sind. Auch sollte die Synthese von gängigen Ausgangsmaterialien ausgehen. Die Erfindung sollte zudem die Aufgabe lösen, Blockcopolymere mit einem geringen Anteil an Polyalkylenoxid zur Verfügung zu stellen. Darüber hinaus sollte der erste Verfahrensschritt der Polyarylenether-Herstellung und der zweite Verfahrensschritt der Umsetzung dessen mit monomerem Alkylenoxid möglichst in einem Lösungsmittel oder Lösungsmittelgemisch, oder der zweite Verfahrensschritt gar ohne Lösungsmittel durchführbar sein. Die Verwendung von nur einem Lösungsmittel oder Lösungsmittelgemisch ermöglicht, bei großtechnischen Anlagen eine vereinfachte Lösungsmittellagerung, Lösungsmittelkreisführung und/oder Lösungsmittelrückgewinnung.

Die Aufgabe wird durch eingangs genanntes Verfahren gelöst.

Bei dem Verfahren zur Herstellung eines Blockcopolymers enthaltend Polyarylenether-und Polyalkylenoxid-Blöcke wird ein HO-terminierter Polyarylenether mit einem monomeren Alkylenoxid umgesetzt. Bei diesem Verfahren kann in einem ersten Schritt der HO-terminierte Polyarylenether hergestellt werden und dieser in einem zweiten Schritt mit einem monomeren Alkylenoxid umgesetzt werden. In einer Ausführungsform kann die Umsetzung in Gegenwart eines Lösungsmittels, insbesondere eines NMP-haltigen Lösungsmittels, durchgeführt werden.

Der OH-terminierte Polyarylenether wird in Folge auch als Polyarylenether (P) bezeichnet. OH-terminierte Polyarylenether sind dem Fachmann als solche bekannt und können aus Bausteinen der allgemeinen Formel I aufgebaut sein, der überwiegend Phenolat-Endgruppen aufweist 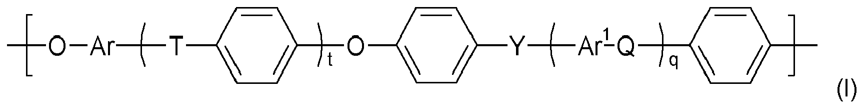 mit folgenden Bedeutungen
- t, q:: unabhängig voneinander 0, 1, 2 oder 3,
- Q, T, Y:: unabhängig voneinander jeweils eine chemische Bindung oder Gruppe, ausgewählt aus -O-, -S-, -SO₂-, S=O, C=O, -N=N-,-CR^{a}R^{b}-, wobei R^{a} und R^{b} unabhängig voneinander jeweils für ein Wasserstoffatom oder eine C₁-C₁₂-Alkyl-, C₁-C₁₂-Alkoxy-oder C₆-C₁₈-Arylgruppe stehen, wobei wenigstens eines aus Q, T und Y von -O- verschieden ist, und wenigstens eines aus Q, T und Y für -SO₂- steht und
- Ar, Ar¹:: unabhängig voneinander eine Arylengruppe mit von 6 bis 18 Kohlenstoffatomen,
Unter Phenolat-Endgruppen werden im Rahmen der vorliegenden Erfindung negativ geladene Sauerstoffatome in Form einer Endgruppe verstanden, die an einen aromatischen Kern gebunden sind. Diese Endgruppen leiten sich von den phenolischen Endgruppen durch Entfernung eines Protons ab. Unter phenolischer Endgruppe wird im Rahmen der vorliegenden Erfindung eine Hydroxygruppe verstanden, die an einen aromatischen Kern gebunden ist. Bei den genannten aromatischen Kernen handelt es sich vorzugsweise um 1,4-Phenylengruppen. Die Polyarylenether (P) der vorliegenden Erfindung können einerseits Phenolat- bzw. phenolische OH-Endgruppen und andererseits Halogenendgruppen aufweisen. Phenolatgruppen zählen in der vorliegenden Erfindung zu den HO-Endgruppen.

Unter dem Begriff "überwiegend Phenolat-Endgruppen" ist zu verstehen, dass mehr als 50 % der vorhandenen Endgruppen Phenolat-Endgruppen sind. Entsprechend ist unter dem Begriff "überwiegend phenolische Endgruppen" zu verstehen, dass mehr als 50 % der vorhandenen Endgruppen phenolischer Art sind.

Die Bestimmung des Anteils der Phenolat-Endgruppen erfolgt vorzugsweise durch Bestimmung der OH-Endgruppen mittels potentiometrischer Titration und Bestimmung der organisch gebundenen Halogen-Endgruppen mittels Atomspektroskopie und anschließender Berechnung der jeweiligen Zahlenanteile in Gew.-% oder mol-%. Entsprechende Methoden sind dem Fachmann bekannt. Die Herstellung der Polyarylenether erfolgt üblicherweise durch Polykondensation geeigneter Ausgangsverbindungen in dipolar-aprotischen Lösungsmitteln bei erhöhter Temperatur (siehe zum Beispiel R.N. Johnson et. al., J. Polym. Sci. A-1 5 (1967) 2375, J.E. McGrath et.al., Polymer 25 (1984) 1827). Eine mögliche Synthese der OH-terminierten Polyarylenether wird in der PCT/EP2009/065035 beschrieben.

Wird in einer bevorzugten Ausführungsform der Erfindung der OH-terminierte Polyarylenether in einer ersten Stufe hergestellt, kann die Bereitstellung des Polyarylenethers oder der Polyarylenether (P) mit überwiegend Phenolat- Endgruppen durch Umsetzung mindestens einer Ausgangsverbindung der Struktur X-Ar-Y (A1) mit mindestens einer Ausgangsverbindung der Struktur HO-Ar¹-OH (A2) in Gegenwart eines Lösungsmittels (L) und einer Base (B) erfolgen, wobei
- Y ein Halogenatom ist,
- X ausgewählt wird aus Halogenatomen und OH, vorzugsweise aus Halogenatomen, insbesondere F, Cl, oder Br und
- Ar und Ar¹ unabhängig voneinander eine Arylengruppe mit 6 bis 18 Kohlenstoffatomen darstellt.

Es kann ein Polyarylenether (P) in Gegenwart eines Lösungsmittels (L) bereitgestellt werden, der aus Bausteinen der allgemeinen Formel I mit den Bedeutungen wie oben definiert aufgebaut ist und überwiegend Phenolat-Endgruppen aufweist:

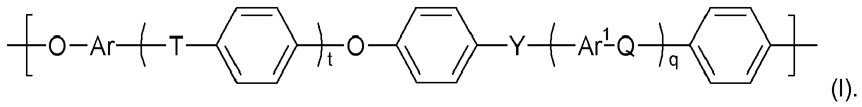

Der Polyarylenether (P) weist vorzugsweise mindestens 60 %, besonders bevorzugt mindestens 80 %, insbesondere mindestens 90 % Phenolat-Endgruppen bezogen auf die Gesamtzahl der Endgruppen auf.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel (I) allerdings unabhängig voneinander ausgewählt aus -O- und -SO₂-, mit der Maßgabe, dass wenigstens eines aus der Gruppe bestehend aus Q, T und Y für -SO₂- steht.

Sofern Q, T oder Y -CR^{a}R^{b}- sind, stehen R^{a} und R^{b} unabhängig voneinander jeweils für ein Wasserstoffatom oder eine C₁-C₁₂-Alkyl-, C₁-C₁₂-Alkoxy- oder C₆-C₁₈-Arylgruppe.

Bevorzugte C₁-C₁₂-Alkylgruppen umfassen lineare und verzweigte, gesättigte Alkylgruppen mit von 1 bis 12 Kohlenstoffatomen. Insbesondere sind folgende Reste zu nennen: C₁-C₆-Alkylrest, wie Methyl, Ethyl, n-Propyl, i-Propyl, n-Butyl, sec.-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren C₁-C₁₂-Alkoxygruppen kommen die weiter oben definierten Alkylgruppen mit von 1 bis 12 Kohlenstoffatomen in Betracht. Vorzugsweise verwendbare Cycloalkylreste umfassen insbesondere C₃-C₁₂-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, -pentyl, -hexyl, Cyclohexylmethyl, -dimethyl, -trimethyl.

Ar und Ar¹ bedeuten unabhängig voneinander eine C₆-C₁₈-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist Ar¹ eine unsubstituierte C₆- oder C₁₂-Arylengruppe.

Als C₆-C₁₈-Arylengruppen Ar und Ar¹ kommen insbesondere Phenylengruppen, wie 1,2-, 1,3- und 1,4-Phenylen, Naphthylengruppen, wie beispielsweise 1,6-, 1,7-, 2,6-und 2,7-Naphthylen, sowie die von Anthracen, Phenanthren und Naphthacen abgeleiteten Arylengruppen in Betracht.

Vorzugsweise werden Ar und Ar¹ in der bevorzugten Ausführungsform gemäß Formel (I) unabhängig voneinander ausgewählt aus der Gruppe bestehend aus 1,4-Phenylen, 1,3-Phenylen, Naphthylen, insbesondere 2,7-Dihydroxynaphthalin, und 4,4'-Bisphenylen.

Im Rahmen des Polyarylenethers (P) vorzugsweise vorliegende Bausteine sind solche, die mindestens eine der folgenden wiederkehrenden Struktureinheiten Ia bis Io enthalten:

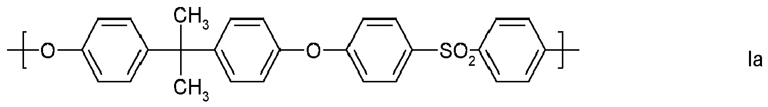

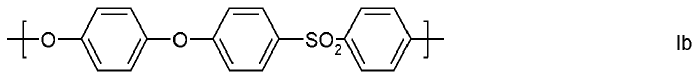

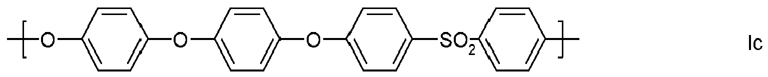

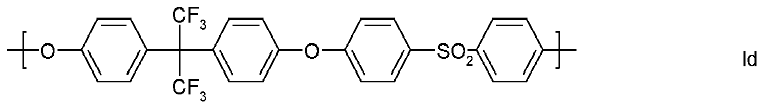

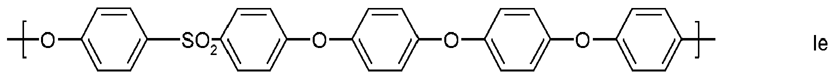

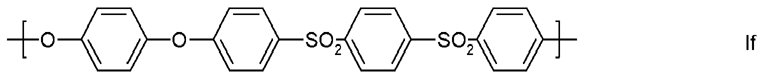

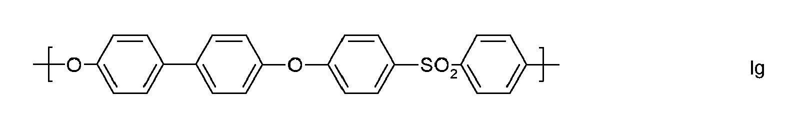

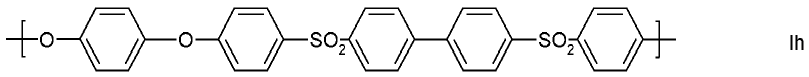

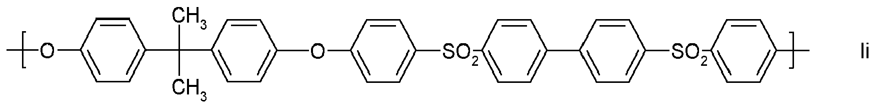

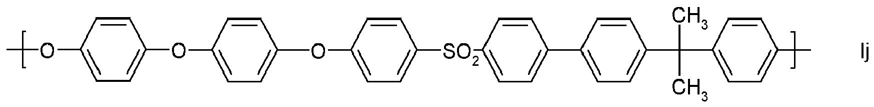

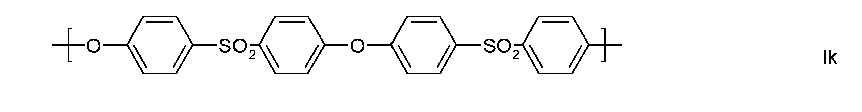

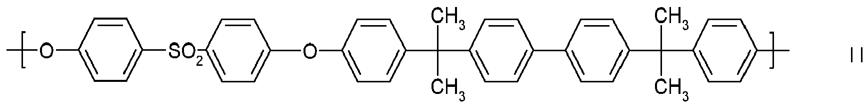

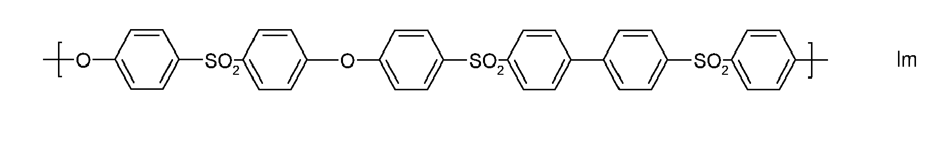

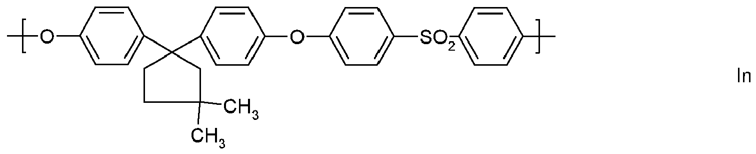

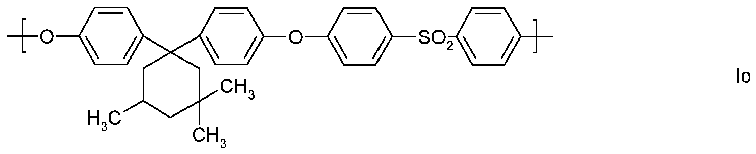

Zusätzlich zu den bevorzugt vorliegenden Bausteinen Ia bis Io sind auch solche Bausteine bevorzugt, in denen eine oder mehrere 1,4-Dihydroxyphenyl-Einheiten durch Resorcin- oder Dihydroxynaphthalin-Einheiten ersetzt sind.

Als Bausteine der allgemeinen Formel I besonders bevorzugt sind die Bausteine la, Ig und Ik. Es ist außerdem besonders bevorzugt, wenn die Polyarylenether der Polyarylenether (P) im Wesentlichen aus einer Sorte Bausteine der allgemeinen Formel I, insbesondere aus einem Baustein ausgewählt aus Ia, Ig und Ik aufgebaut sind.

In einer besonders bevorzugten Ausführungsform ist Ar = 1,4-Phenylen, t = 1, q = 0, T = SO₂ und Y = SO₂. Derartige Polyarylenether werden als Polyethersulfon (PESU) bezeichnet.

Abgesehen von den genannten wiederkehrenden Bausteinen ist für die vorliegende Erfindung die Struktur der Endgruppen wesentlich. Die Polyarylenether (P), welche im bereitgestellt werden, weisen erfindungsgemäß überwiegend Phenolat-Endgruppen auf.

Vorzugsweise weist der Polyarylenether (P) ein mittleres Molekulargewichte Mₙ (Zahlenmittel) im Bereich von 2.000 bis 60.000 g/mol, insbesondere 5.000 bis 40.000 g/mol, bestimmt wie oben beschrieben durch Endgruppenanalyse.

Vorzugsweise weist der Polyarylenether (P) eine relative Viskosität von 0,20 bis 0,95 dl/g, insbesondere von 0,30 bis 0,80 auf. Die relative Viskosität kann je nach Löslichkeit der Polyarylenethersulfone entweder in 1 gew.-%iger N-Methylpyrrolidon-Lösung, in Mischungen aus Phenol und Dichlorbenzol oder in 96-%iger Schwefelsäure bei jeweils 20 °C bzw. 25 °C gemessen werden.

Das Verhältnis der Ausgangsverbindungen (A1) und (A2) kann bei der Synthese dabei so gewählt werden, dass die Zahl der phenolischen bzw. Phenolat-Endgruppen die Zahl der Halogen-Endgruppen übersteigt.

Geeignete Ausgangsverbindungen sind dem Fachmann bekannt und unterliegen keiner prinzipiellen Einschränkung, sofern die genannten Substituenten im Rahmen einer nucleophilen aromatischen Substitution ausreichend reaktiv sind.

Bevorzugte Ausgangsverbindungen sind difunktionell. Difunktionell bedeutet dabei, dass die Zahl der in der nucleophilen aromatischen Substitution reaktiven Gruppen zwei pro Ausgangsverbindung beträgt. Ein weiteres Kriterium für eine geeignete difunktionelle Ausgangsverbindung ist eine ausreichende Löslichkeit im Lösungsmittel, wie weiter unten näher ausgeführt.

Bevorzugte Verbindungen (A2) sind demzufolge solche mit zwei phenolischen Hydroxygruppen.

Dem Fachmann ist bekannt, dass die Umsetzung der phenolischen OH-Gruppen vorzugsweise in Gegenwart einer Base erfolgt, um die Reaktivität gegenüber den Halogensubstituenten der Ausgangsverbindung (A1) zu erhöhen.

Bevorzugt sind monomere Ausgangsverbindungen, d.h. die Reaktion wird vorzugsweise ausgehend von Monomeren und nicht ausgehend von Präpolymeren durchgeführt.

Vorzugsweise wird als Ausgangsverbindung (A1) ein Dihalogendiphenylsulfon verwendet. Vorzugsweise wird als Ausgangsverbindung (A2) Dihydroxydiphenylsulfon verwendet.

Geeignete Ausgangsverbindungen (A1) sind insbesondere Dihalogendiphenylsulfone wie 4,4'-Dichlordiphenylsulfon, 4,4'-Difluordiphenylsulfon, 4,4'-Dibromdiphenylsulfon, Bis(2-chlorophenyl)sulfone, 2,2'-Dichlordiphenylsulfon und 2,2'-Difluordiphenylsulfon, wobei 4,4'-Dichlordiphenylsulfon und 4,4'-Difluordiphenylsulfon besonders bevorzugt sind.

Bevorzugte Ausgangsverbindungen (A2) mit zwei phenolischen Hydroxygruppen werden aus folgenden Verbindungen ausgewählt:
- Dihydroxybenzole, insbesondere Hydrochinon und Resorcin;
- Dihydroxynaphthaline, insbesondere 1,5-Dihydroxynaphthalin, 1,6- Dihydroxynaphthalin, 1,7- Dihydroxynaphthalin, und 2,7- Dihydroxynaphthalin;
- Dihydroxybiphenyle, insbesondere 4,4'-Biphenol und 2,2'-Biphenol;
- Bisphenylether, insbesondere Bis(4-hydroxyphenyl)ether und Bis(2-hydroxyphenyl)ether;
- Bisphenylpropane, insbesondere 2,2-Bis(4-hydroxyphenyl)propan, 2,2-Bis(3-methyl-4-hydroxyphenyl)propan, und 2,2-Bis(3,5-dimethyl-4-hydroxyphenyl)propan;
- Bisphenylmethane, insbesondere Bis(4-hydroxyphenyl)methan;
- Bisphenylsulfone, insbesondere Bis(4-hydroxyphenyl)sulfon;
- Bisphenylsulfide, insbesondere Bis(4-hydroxyphenyl)sulfid;
- Bisphenylketone, insbesondere Bis(4-hydroxyphenyl)keton;
- Bisphenylhexafluoropropane, insbesondere 2,2-Bis(3,5-dimethyl-4-hydroxyphenyl)hexafluoropropan; und
- Bisphenylfluorene, insbesondere 9,9-Bis(4-hydroxyphenyl)fluoren.

Es ist bevorzugt ausgehend von den vorgenannten aromatischen Dihydroxyverbindungen (A2) durch Zugabe einer Base (B) ihre Dikalium- oder Dinatriumsalze herzustellen und mit der Ausgangsverbindung (A1) zur Reaktion zu bringen. Die vorgenannten Verbindungen können zudem einzeln oder als Kombination zwei oder mehrerer der vorgenannten Verbindungen eingesetzt werden.

Hydrochinon, Resorcin, Dihydroxynaphthalin, insbesondere 2,7- Dihydroxynaphthalin, Bisphenol A, Dihydroxydiphenylsulfon und 4,4'-Bisphenol sind als Ausgangsverbindung (A2) besonders bevorzugt.

Es ist jedoch auch möglich, trifunktionelle Verbindungen zu verwenden. In diesem Fall entstehen verzweigte Strukturen. Sofern eine trifunktionelle Ausgangsverbindung (A2) zum Einsatz kommt ist 1,1,1-Tris(4-hydroxyphenyl)-ethan bevorzugt.

Die einzusetzenden Mengenverhältnisse ergeben sich im Prinzip aus der Stöchiometrie der ablaufenden Polykondensationsreaktion unter rechnerischer Abspaltung von Chlorwasserstoff und werden vom Fachmann in bekannter Weise eingestellt. Um jedoch die Zahl der phenolischen OH-Endgruppen zu erhöhen, ist ein Überschuss an OH-Endgruppen zu bevorzugen.

Die Herstellung von Polyarylenethern bei gleichzeitiger Steuerung der Endgruppen ist dem Fachmann an sich bekannt und wird weiter unten näher beschrieben.

Die Einstellung des Verhältnisses von Halogen-Endgruppen zu phenolischen Endgruppen erfolgt in einer bevorzugten Ausführungsform durch gezielte Einstellung eines Überschusses der difunktionellen Ausgangsverbindung (A2) in Bezug auf eine Dihalogenverbindung als Ausgangsverbindung (A1), d.h. X=Y=Halogen.

Besonders bevorzugt beträgt das Molverhältnis (A2)/(A1) in dieser Ausführungsform von 1,005 bis 1,2, insbesondere von 1,01 bis 1,15, ganz besonders bevorzugt von 1,02 bis 1,1.

Alternativ kann auch eine Ausgangsverbindung (A1) mit X = Halogen und Y = OH eingesetzt werden. In diesem Fall erfolgt die Einstellung eines Überschusses von Hydroxygruppen durch Zugabe der Ausgangsverbindung (A2). In diesem Fall beträgt das Verhältnis der eingesetzten phenolischen Endgruppen zu Halogen vorzugsweise von 1,01 bis 1,2, insbesondere 1,03 bis 1,15, ganz besonders bevorzugt 1,05 bis 1,1.

Vorzugsweise beträgt der Umsatz bei der Polykondensation mindestens 0,9, wodurch ein ausreichend hohes Molekulargewicht gewährleistet wird.

Im Rahmen der vorliegenden Erfindung bevorzugte Lösungsmittel (L) sind organische insbesondere aprotische polare Lösungsmittel. Geeignete Lösungsmittel weisen au-βerdem einen Siedepunkt im Bereich von 80 bis 320°C, insbesondere 100 bis 280°C, bevorzugt von 150 bis 250°C auf. Geeignete aprotische polare Lösungsmittel sind beispielsweise hochsiedende Ether, Ester, Ketone, asymmetrisch halogenierte Kohlenwasserstoffe, Anisol, Dimethylformamid, Dimethylsulfoxid, Sulfolan, N-Methyl-2-pyrrolidon und/oder N-Ethyl-2-pyrrolidon. Es ist auch möglich Mischungen dieser Lösungsmittel zu verwenden.

Ein bevorzugtes Lösungsmittel ist insbesondere N-Methyl-2-pyrrolidon und/oder N-Ethyl-2-pyrrolidon.

Vorzugsweise erfolgt die Umsetzung der Ausgangsverbindungen (A1) und (A2) in den genannten aprotischen polaren Lösungsmitteln (L), insbesondere N-Methyl-2-pyrrolidon.

Die Umsetzung der Ausgangsverbindungen (A1) und (A2) erfolgt in Gegenwart einer Base (B). Vorzugsweise sind die Basen wasserfrei. Geeignete Basen sind insbesondere wasserfreies Alkali- und/oder Erdalkalicarbonat, vorzugsweise Natrium-, Kalium-, Calciumcarbonat oder Mischungen davon, wobei Kaliumcarbonat ganz besonders bevorzugt ist, insbesondere Kaliumcarbonat mit einer volumengewichteten mittleren Teilchengröße von weniger als 100 Mikrometer, bestimmt mit einem Partikelgrößenmessgerät in einer Suspension in N-Methyl-2-pyrrolidon.

Eine besonders bevorzugte Kombination ist N-Methyl-2-pyrrolidon als Lösungsmittel (L) und Kaliumcarbonat als Base (B).

Die Umsetzung der geeigneten Ausgangsverbindungen (A1) und (A2) wird bei einer Temperatur von 80 bis 250 °C, bevorzugt 100 bis 220 °C durchgeführt, wobei die Obergrenze der Temperatur durch den Siedepunkt des Lösungsmittels bestimmt wird.

Die Umsetzung erfolgt vorzugsweise in einem Zeitintervall von 2 bis 12 h, insbesondere von 3 bis 8 h.

Im Anschluss an die Bereitstellung oder Herstellung des HO-terminierten Polyarylenethers erfolgt die erfindungsgemäße Umsetzung mit monomerem Alkylenoxid. Sofern in der Reaktionslösung Alkylenoxide zu Oligomeren reagieren, kann der HO-terminierte Polyarylenether auch mit diesen Oligomeren reagieren.

Vorzugsweise erfolgt die Herstellung des Blockcopolymers ohne vorherige Aufarbeitung des HO-terminierten Polyarylenethers. Besonders bevorzugt erfolgt die Umsetzung des HO-terminierten Polyarylenethers, also ohne dessen vorherige Isolation aus dem Reaktionsgemisch, zum Beispiel N-Methylpyrrolidon, in dem zuvor der HO-terminierte Polyarylenether hergestellt wurde.

Als Alkylenoxid kommen monomeres Alkylenoxid oder Mischungen unterschiedlicher Alkylenoxide in Betracht. Das Alkylenoxid kann mindestens zwei oder mehr Kohlenstoffatome aufweisen. Beispielsweise können Ethylenoxid, Propylenoxid, 1,2-Butylenoxid, 2,3-Butylenoxid, 1,2-Pentenoxid, 2,3-Pentenoxid oder Epichlorohydrin und/oder deren Mischungen eingesetzt werden. Vorzugsweise können Ethylenoxid, Propylenoxid, 1,2-Butylenoxid, 2,3-Butylenoxid und/oder deren Mischungen eingesetzt werden. Beispielsweise wird Ethylenoxid und/oder Propylenoxid eingesetzt.

Die Alkoxylierung des OH-terminierten Polyarylenethers kann in Substanz oder in einem organischen Lösungsmittel durchgeführt werden. Vorzugsweise wird die Alkoxylierung in einem organischen Lösungsmittel durchgeführt.

Die Prozessbedingungen für die Alkoxylierung werden nachfolgend näher beschrieben.

Dabei kann es vorteilhaft sein vor der Alkoxylierung das Reaktionsgemisch bestehend aus dem Aktivator, vorzugsweise dem Lösungsmittel und dem Alkoxylierungskatalysator zu entwässern. Dies gelingt in einem einfachen Schritt durch Erhitzen auf 80 bis 150 °C unter reduziertem Absolutdruck von 0,01 bis 0,5 bar für den Fall dass kein Lösungsmittel verwendet wird oder in einer azeotrop durchgeführten Destillation von Teilen des Lösungsmittels für den Fall, dass ein Lösungsmittel verwendet wird.

Vorzugsweise wird das Verfahren unter Inertgas-Atmosphäre (z.B. unter Stickstoff) durchgeführt. Insbesondere kann das Verfahren unter weitgehendem Ausschluss von Sauerstoff, Kohlendioxid und Wasser durchgeführt werden.

Die Umsetzung mit Alkylenoxiden erfolgt vorteilhaft durch Reaktion in Druckgefäßen wie Autoklaven oder Stahlreaktoren in einem Druckbereich zwischen Normaldruck und 10 bar Überdruck, insbesondere bis 8 bar Überdruck. Die Reaktionstemperatur liegt abhängig vom eingesetzten Alkylenoxid von 70 bis 200 °C, insbesondere von 100 bis 180 °C In diesen Bereichen sind auch verschiedene Druckprogramme möglich. Bevorzugte Reaktionstemperaturen sind etwa von 140 bis 150 °C im Falle von Butylenoxid, etwa von 130 bis 140 °C im Falle von Propylenoxid, und etwa von 120 bis 130 °C im Falle von Ethylenoxid. Die Zugabegeschwindigkeit des Alkylenoxids liegt zum Beispiel im Bereich von 0,5 bis 2 mol/h, vorzugsweise von 1 bis 1,5 mol/h.

Bespiele von geeigneten organischen, insbesondere polar-aprotischen Löunsgmitteln sind Ether, insbesondere cyclische Ether wie Tetrahydrofuran (THF), Dioxane; N,N-dialkylamide wie Dimethylformamid und Dimethylacetamid, und N-alkyllactame wie N-Methylpyrrolidon. Es ist auch möglich, entsprechende Mischungen der Lösungsmittel zu verwenden.

Vorzugsweise wird das Lösungsmittel gewählt, das bereits unter Schritt (A) bei der Synthese des OH-terminierten Polyarylenethers zum Einsatz kam.

Als Katalysatoren für die Ringöffnungspolymerisation (Alkoxylierung) werden kationisch initiierende Katalysatoren wie BR₃-addukte (insbesondere R = F, C₆F₅), Metallhalogenide wie AlCl₃. ZnCl₂, SnCl₄, SnCl₂, Metallalkylacarboxylate wie z.B. Cr(II)oleat, Metallalkoholate wie z.B. Ba(OR)₂, Al(OR)₃, Ti(OR)₄ aber auch Oxonium- und Carboniumsalze beschrieben. In jüngerer Zeit finden auch Festphasenkatalysatoren wie Doppelmetallcyanide, basische Aluminate und Mischsilikate wie Hydrotalcite Verwendung, weil eine aufwändige Reinigung der Reaktionsprodukte aufgrund der hohen Aktivität unter Verbleib des Katalysators im Produkt oder durch schlichtes Filtrieren unterbleiben kann. Die anionisch initiiere Ringöffnungspolymerisation von Alkylenoxiden kann mit basischen Katalysatoren wie Alkalimetallhydroxide, Alkalimetallalkoholate, tertiäre Amine, organische Phosphane durchgeführt werden. Als Alkylimetallalkoholate eignen sich insbesondere sterisch gehinderte Alkoholate insbesondere Natrium- und Kaliumsalze, zum Beispiel Kalium-tert-Butylat.

Die Menge an Katalysator richtet sich nach den Alyklenoxid Umsätzen und liegt zwischen 0,1 bis 10 Gew.-% in Bezug auf das Endprodukt.

In einer weiteren speziellen Ausführung kann auf die Zugabe des Alkoxylierungkatalysators ganz oder teilweise verzichtet werden, wenn die OH-terminierten Polyarylenether herstellungsbedingt bereits mit Phenolat-Endgruppen vorliegen und daher nicht durch Zugabe von basischen Katalysatoren erzeugt werden müssen.

In einer Ausführungsform können die separat hergestellten und gereinigten OH-terminierten Polyarylenether in geeigneten Lösungsmitteln wie N-methylpyrrolidon, N,N-Dimethylacetamid, Dimethylformamid oder γ-Butyrolacton gelöst werden und anschließend wie oben beschrieben als Startermoleküle mit Alkylenoxiden weiter reagieren.

Die Isolierung des erfindungsgemäßen Blockcopolymers kann durch Fällung der Polymerlösung in Wasser oder Gemischen von Wasser mit weiteren Lösungsmitteln erfolgen. Das ausgefallene Blockcopolymer kann anschließend mit Wasser extrahiert und danach getrocknet.

In einer Ausführungsform der Erfindung kann die Fällung in einem saueren Medium geschehen. Geeignete Säuren sind dem Fachmann bekannt. Insbesondere eigenen sich organische oder anorganische Säuren. Zum Beispiel können Carbonsäuren wie Essigsäure, Propionsäure, Bernsteinsäure oder Zitronensäure oder Mineralsäuren wie z.B. Salzsäure, Schwefelsäure oder Phosphorsäure verwendet werden.

Das Verfahren stellt das erfindungsgemäße Blockcopolymer zur Verfügung, das einen Restgehalt an ungebundenem Polyalkylenoxid kleiner 0,3 Gew.-%, vorzugsweise kleiner 0,2 Gew.-%, insbesondere kleiner 0,1 Gew.-% aufweist. Eine beispielhafte Bestimmung des Polyalkylenoxid Restgehaltes mittels HPLC ist im Beispielteil beschrieben.

Des Weiteren betrifft die Erfindung ein Blockcopolymer das nach dem oben beschriebenen Verfahren herstellbar ist. Die Erfindung betrifft auch das Blockcopolymer aus dem Verfahren, das bevorzugt ein Triblockcopolymer ist. Insbesondere kann das erfindungsgemäße Blockcopolymer ein Triblockpolymer mit Polyalkylenoxid-Polyarylenether-Polyalkylenoxid-Blöcken sein.

Die Erfindung betrifft zudem ein Triblockpolymer mit Polyalkylenoxid-Polyarylenether-Polyalkylenoxid Blöcken als solches.

Sowohl das Blockcopolymer aus dem Verfahren als auch das Triblockcopolymer weist in einer Ausführung der Erfindung ein Verhältnis von Mw/Mn gemessen nach Gelpermeationschromatographie von 1,5 bis 3,0 auf insbesondere von 2,2 bis 2,9, bevorzugt von 2,3 bis 2,8. Bei PSU-Polyalkylenoxid Blockcopolymeren kann die Messung mit THF als Lösungsmittel und Polystyrol als Standard erfolgen, wobei ein Brechungsindexdetektor (RI-Detektor) zur Messung genutzt werden kann. Alle anderen Polyarylenether-Polyalkylenoxid Blockcopolymere wie PESU- und PPSU-basierte-Polyalkylenoxid Blockcopolymere können mit DMAc als Lösungsmittel und PMMA als Standard und einem RI-Detektor vermessen werden.

In einer Ausführungsform der Erfindung hat das Blockcopolymer als auch das Polyalkylenoxid-Polyarylenether-Polyalkylenoxid Blockcopolymer einen Mw von 10.000 bis 90.000 g/mol, insbesondere von 15.000 bis 80.000 g/mol, bevorzugt von 20.000 bis 70.000 g/mol gemessen mittels GPC. Die Messmethode wurde bereits oben beschrieben.

In einer Ausführungsform der Erfindung hat das Blockcopolymer als auch das Polyalkylenoxid-Polyarylenether-Polyalkylenoxid Blockcopolymer eine Viskositätszahl von 15 bis 100, insbesondere von 20 bis 95, bevorzugt von 25 bis 90. Die Bestimmung der Viskositätszahl erfolgt einer 1 %-igen Lösung von N-Methyl-pyrrolidon bei 25°C gemäß DIN EN ISO 1628-1.

Die vorliegende Erfindung betrifft zudem eine Formmasse, die von 1 bis 60 Gew.-% mindestens ein erfindungsgemäßes Blockcopolymers oder Mischungen unterschiedlicher Blockcopolymere enthält. Die Formmasse kann zum Beispiel als Blockcopolymer ein Triblockcopolymere umfassen. Die Formmasse kann zudem von 40 bis 99 Gew.-% mindestens eines Polyarylenethers umfassen wobei die Gew.-% Angaben auf die Summe aus Blockcopolymer und Polyarylenether bezogen sind und diese Summe 100 Gew.-% beträgt. Als Polyarylenether, die der Formmasse beigemischt werden können, eignen sich beispielsweise PSU und/oder PPSU und/oder Copolymere der genannten Strukturen.

Des Weiteren bezieht sich die Erfindung auf die Verwendung mindestens eines erfindungsgemäßen Blockcopolymers zum Beispiel eines Triblockcopolymers mit Polyalkylenoxid-Polyarylenether-Polyalkylenoxid Blöcken zur Herstellung von Beschichtungen, Fasern, Folien, Formteilen und/oder Membranen. Ebenso betrifft die Erfindung die Verwendung von Formmassen, die erfindungsgemäßes Blockcopolymer und/oder Triblockcopolymer umfassen zur Herstellung von Beschichtungen, Fasern, Folien, Formteilen und/oder Membranen.

Unter Beschichtung wird im Rahmen der Erfindung zum Beispiel eine auf der Oberfläche eines Trägermaterials angebrachte insbesondere darauf festhaftende Schicht verstanden. Die Beschichtung kann nach einem Fertigungsverfahren nach DIN 8580 aufgebracht werden kann. Bei einer Beschichtung im Sinne der vorliegenden Anmeldung kann es sich um eine dünne Schicht oder eine dicke Schicht sowie um eine oder um mehrere in sich zusammenhängende Schichten handeln. Als Trägermaterialien können fast alle bekannten Materialien genutzt werden, wie Metalle, Isolatoren, Halbleiter, kristalline oder amorphe Materialien, textile Flächengebilde (Gewebe, Vliese, Maschenwaren) oder Folien.

Eine Faser im Sinne der Erfindung ist ein im Verhältnis zur Länge dünnes und flexibles Gebilde.

Ein Formteil im Sinne der Erfindung ist ein im Wesentlichen fester geometrischer Körper der zum Beispiel durch Urformverfahren, Spritzgießen, Extrusion, Kalandrieren, Rotationsformen, Schäumen, Blasform-Verfahren, Umformverfahren oder Fügeverfahren hergestellt werden kann.

Eine Membran nach der vorliegenden Erfindung ist eine Trennschicht. Im Sinne der Erfindung kann unter einer Membran eine undurchlässige, teilweise undurchlässig oder selektiv permeabel oder eine in einer Richtung durchlässig oder eine durchlässige Membran verstanden werden.

Das erfindungsgemäße Blockcopolymers oder die Formmasse umfassend die erfindungsgemäßen Blockcopolymere können in unterschiedlichen Filtermembrangeometrien verwendet werden. So können die Blockcopolymere in Flachmembranen und/oder in kapillarartigen Hohlfasermembranen zum Einsatz kommen. Diese Membranen können im Dead-End Verfahren oder im Cross-flow Verfahren angeströmt werden.

Die Membranen im Sinne der Erfindung können in der Medizintechnik eingesetzt werden. Des Weiteren können die Membranen zur Flüssigkeitsaufarbeitung, insbesondere zur Wasseraufarbeitung eingesetzt werden.

In einer besonderen Ausführungsform bezieht sich die die Erfindung auf Folien oder Fasern mit einer Wandstärke von 0,5 bis 100 µm umfassend von 1 bis 60 Gew.-% des erfindungsgemäßen Blockcopolymers und/oder des Triblockcopolymers enthaltend Polyalkylenoxid-Polyarylenether-Polyalkylenoxid Blöcke und von 40 bis 99 Gew.-% Polyarylenether wobei die Gew.-% Angaben auf die Summe aus Blockcopolymer und Polyarylenether bezogen sind und diese Summe 100 Gew.-% beträgt. In einer Ausführungsform der Erfindung ist es bevorzugt, wenn der Polyarylenether-Block des Blockcopolymers mit dem beigemischten Polyarylenether strukturgleich ist.

### Beispiele

DIN EN ISO 1628-1: Kunststoffe - Bestimmung der Viskosität von Polymeren in verdünnter Lösung durch ein Kapillarviskosimeter - Teil 1: Allgemeine Grundlagen (ISO 1628-1:2009); Deutsche Fassung EN ISO 1628-1:2009

DIN EN ISO 1043-1: Kunststoffe - Kennbuchstaben und Kurzzeichen - Teil 1: Basis-Polymere und ihre besonderen Eigenschaften (ISO 1043-1:2001); Deutsche Fassung EN ISO 1043-1:2002.

Die Viskositätszahl der Polyarylenether wurde in 1 %-iger Lösung von N-Methyl-pyrrolidon bei 25°C gemäß DIN EN ISO 1628-1 bestimmt.

Die Zusammensetzung der Produkte wurde mittels ¹H-NMR-Spektroskopie bestimmt.

Die Glastemperatur der Produkte wurde durch DSC-Messung mit einer Aufheizrate von 20 k/min ermittelt. Angegeben sind die im 2. Heizlauf ermittelten Werte.

Bei PSU-Polyalkylenoxid Blockcopolymeren wurde die Molekulargewichtsverteilung der Produkte mittels GPC bestimmt. Dabei wurde die Messung mit THF als Lösungsmittel und PS als Standard sowie einem RI-Detektor durchgeführt.

Bei allen anderen Polyarylenether-Polyalkylenoxid Blockcopolymere wie PESU- und PPSU-basierten Polyalkylenoxid Blockcopolymeren wurden die GPC-Messungen mit DMAc als Lösungsmittel, welches mit 0,5 % LiBr versetzt war, und PMMA als Standard und einem RI-Detektor durchgeführt.

Zur Bestimmung des Restgehaltes an ungebundenem Polyalkylenoxid mittels HPLC-Messung wurden 50 mg Polymer in 1 ml DMAc gelöst und anschließend mit 3 ml THF verdünnt. Diese Lösung wurde filtriert (0,2 µm Porenweite) und einem Säulenkopf einer C18 RP-Säule injiziert. Anschließend wurde 3 min mit TH F/Wasser im Verhältnis 50 zu 50 und dann 0,1 min mit THF eluiert (Durchflussgeschwindigkeit 3 ml/min). Die Detektion erfolgte über einen Evaporate Light Scattering Detector.

### Versuch 1

### Synthese Polyarylenether (P1)

Polyarylenether mit OH-Endgruppen, erhalten durch nucleophile aromatische Polykondensation von 287,08 g (1,000 mol) Dichlordiphenylsulfon, 249,42 g (1,0926 mol) Bisphenol A, unter Einwirkung von 148,58 g (1,075 mol) Kaliumcarbonat (Pottasche) in 476 ml NMP. Diese Mischung wurde 6 Stunden bei 190°C gehalten. Danach wurde der Ansatz durch Zugabe von 1500 ml NMP verdünnt. Nach Abkühlen auf <80°C wurde die Suspension abgelassen, die festen Bestandteile wurden durch Filtration abgetrennt und die erhaltene Polymerlösung für die Alkoxylierung bereitgestellt.

Ein geringer Teil der Lösung wurde durch Fällung in NMP/Wasser isoliert. Nach sorgfältigem Waschen mit Wasser wurde der Polyarylenether im Vakuum bei 120°C für 12 h getrocknet. Die Viskositätszahl des Polyarylenethers lag bei 17,3 ml/g, die Glastemperatur bei 162°C, der Anteil an phenolischen OH-Gruppen bei 0,675 Gew.-%.

### Ethoxylierung

In einem gereinigten und getrockneten Stahlreaktor (einmal mit Isopropanol/Aceton ausgekocht) wurde die Polymerlösung (500 g) vorgelegt und dreimal mit Stickstoff inertisiert. Anschließend wurde der Druck des Reaktors mit Stickstoff auf 1,5 bar eingestellt und die Reaktortemperatur auf 120 °C angehoben. Nach erreichen der Innentemperatur wurde Ethylenoxid (47,5 g; 1,08 mol) innerhalb von 10 Minuten zudosiert. Es wurde 10 h bei 120 °C gerührt und restliches Ethylenoxid durch Einleitung von Stickstoff entfernt. Das Blockcopolymer wurde bei 100 °C ausgeschleust. Das Blockcopolymer wurde durch Fällung in NMP/Wasser 1/9 isoliert. Nach sorgfältigem Waschen mit Wasser wurde das Blockcopolymer im Vakuum bei 120°C für 12 h getrocknet. Die Ausbeute betrug 531,7 g.

### Versuch 2

### Synthese Polyarylenether (P2)

Polyarylenether mit OH-Endgruppen, erhalten durch nucleophile aromatische Polykondensation von 287,08 g (1,000 mol) Dichlordiphenylsulfon, 238,61 g (1,0453 mol) Bisphenol A, unter Einwirkung von 148,58 g (1,075 mol) Kaliumcarbonat (Pottasche) in 476 ml NMP. Diese Mischung wurde 6 Stunden bei 190°C gehalten. Danach wurde der Ansatz durch Zugabe von 1500 ml NMP verdünnt. Nach Abkühlen auf weniger als 80°C wurde die Suspension abgelassen, die festen Bestandteile wurden durch Filtration abgetrennt und die erhaltene Polymerlösung für die Alkoxylierung bereitgestellt.

Ein geringer Teil der Lösung wurde durch Fällung in N M P/Wasser isoliert. Nach sorgfältigem Waschen mit Wasser wurde der Polyarylenether im Vakuum bei 120°C für 12 h getrocknet. Die Viskositätszahl des Polyarylenethers lag bei 28,1 ml/g, die Glastemperatur bei 174°C, der Anteil an phenolischen OH-Gruppen bei 0,40 Gew.-%.

### Ethoxylierung

### In einem gereinigten und getrockneten Stahlreaktor (einmal mit Isopropanol/Aceton ausgekocht) wurde die Polymerlösung (1000 g) vorgelegt und dreimal mit Stickstoff inertisiert. Anschließend wurde der Druck des Reaktors mit Stickstoff auf 1,5 bar eingestellt und die Reaktortemperatur auf 120 °C angehoben. Nach Erreichen der Innentemperatur wurde Ethylenoxid (40,5 g; 0,91 mol) innerhalb von 10 Minuten zudosiert. Es wurde 10 h bei 120 °C gerührt und dann restliches Ethylenoxid durch Einleitung von Stickstoff entfernt. Das Blockcopolymer wurde bei 100 °C ausgeschleust.

Das Blockcopolymer wurde durch Fällung in NMP/Wasser isoliert. Nach sorgfältigem Waschen mit Wasser wurde das Blockcopolymer im Vakuum bei 120°C für 12 h getrocknet.

### Versuch 3

### Synthese Polyarylenether (P3)

Polyarylenether mit OH-Endgruppen, erhalten durch nucleophile aromatische Polykondensation von 574,16 g (2,000 mol) Dichlordiphenylsulfon, 464,71 g (2,0357 mol)

Bisphenol A, unter Einwirkung von 297,15 g (2,15 mol) Kaliumcarbonat (Pottasche) in 952 ml NMP. Die Mischung wurde 6 Stunden bei 190°C gehalten. Danach wurde der Ansatz durch Zugabe von 2911 ml NMP verdünnt. Nach Abkühlen auf weniger als 80°C wurde die Suspension abgelassen, die festen Bestandteile wurden durch Filtration abgetrennt und die erhaltene Polymerlösung für die Alkoxylierung bereitgestellt.

Ein geringer Teil der Lösung wurde durch Fällung in N M P/Wasser isoliert. Nach sorgfältigem Waschen mit Wasser wurde der Polyarylenether im Vakuum bei 120°C für 12 h getrocknet. Die Viskositätszahl des Polyarylenethers lag bei 43,6 ml/g, die Glastemperatur bei 183°C, der Anteil an phenolischen OH-Gruppen bei 0,60 Gew.-%.

### Ethoxylierung

In einem gereinigten und getrockneten Stahlreaktor (einmal mit Isopropanol/Aceton ausgekocht) wurde die Polymerlösung (900 g) vorgelegt und dreimal mit Stickstoff inertisiert. Anschließend wurde der Druck des Reaktors mit Stickstoff auf 1,5 bar eingestellt und die Reaktortemperatur auf 120 °C angehoben. Nach Erreichen der Innentemperatur wurde Ethylenoxid (31,8 g; 0,72 mol) innerhalb von 30 Minuten zudosiert. Es wurde 2 h bei 120 °C bis zur Druckkonstanz gerührt und dann restliches Ethylenoxid durch Einleitung von Stickstoff entfernt. Das Reaktionsprodukt wurde bei 100 °C ausgeschleust. Das Produkt wurde durch Fällung in NMP/Wasser isoliert. Nach sorgfältigem Waschen mit Wasser wurde das Produkt im Vakuum bei 120°C für 12 h getrocknet. Die Ausbeute lag bei 931,8 g.

Die Produkte aus den Versuchen 1 bis 3 wurden durch Ausfällung in Wasser erhalten, sorgfältig gewaschen und nach Trocknung durch 1H-NMR (D6-DMSO; Polyethylenoxidgehalt im Copolymer), DSC-Messungen (Glasübergangstemperatur), HPLC (Polyethylenoxidgehalt) und GPC-Messung (THF, PS-Standards) charakterisiert. Tabelle 1 gibt die erhalten Daten in einer Übersicht wieder.

**Tabelle 1: Blockcopolymere aus den Versuchen1-3.**

| Versuch | 1 | 2 | 3 |
|---|---|---|---|
| Anteil gebundenes PEO im Blockcopo. [Gew.-%] | 22,7 | 8,3 | 2,9 |
| Tg[°C] | 59 | 106 | 157 |
| Anteil ungebundenes PEO [Gew.-%] | Weniger als 0,1 | Weniger als 0,1 | Weniger als 0,1 |
| Mw | 5606 | 15256 | 20481 |
| Mw/Mn | 2,3 | 2,1 | 2,1 |

### Versuch 4

### Synthese Polyarylenether (P4)

Polyarylenether mit OH-Endgruppen, erhalten durch nucleophile aromatische Polykondensation von 574,16 g (2,000 mol) Dichlordiphenylsulfon, 512,09 g (2,047 mol) Dihydroxydiphenylsulfon, unter Einwirkung von 290,24 g (2,1 mol) Kaliumcarbonat (Pottasche) in 1053 ml NMP. Die Mischung wurde 6 Stunden bei 190°C gehalten. Nach Abkühlen auf weniger als 80°C wurde die Suspension abgelassen, die festen Bestandteile wurden durch Filtration abgetrennt. Der Polyarylenether wurde durch Fällung in NMP/Wasser isoliert. Nach sorgfältigem Waschen mit Wasser wurde das Produkt im Vakuum bei 120°C für 12 h getrocknet. Die Viskositätszahl des Polyarylenethers lag bei 52,4 ml/g, die Glastemperatur bei 224°C, der Anteil an phenolischen OH-Gruppen bei 0,16 Gew.-%. Aus dem Polyarylenetherwurde eine 20 Gew% Lösung in NMP hergestellt und die erhaltene Polymerlösung für die Alkoxylierung bereitgestellt.

### Ethoxylierung

In einem gereinigten und getrockneten Stahlreaktor (einmal mit Isopropanol/Aceton ausgekocht) wurde die Polymerlösung aus Versuch 4 (900 g) vorgelegt, darin 1,95 g KOtBu gelöst und dreimal mit Stickstoff inertisiert. Anschließend wurde der Druck des Reaktors mit Stickstoff auf 1,5 bar eingestellt und die Reaktortemperatur auf 120 °C angehoben. Nach Erreichen der Innentemperatur wurde Ethylenoxid (45 g) innerhalb von 10 Minuten zudosiert. Es wurde 10 h bei 120 °C gerührt und restliches Ethylenoxid durch Einleitung von Stickstoff entfernt. Das Blockcopolymer wurde bei 100 °C ausgeschleust. Die Ausbeute betrug 945 g. Das Blockcopolymer wurde durch Fällung in Wasser/NMP bei Raumtemperatur isoliert. Die Ergebnisse der Charakterisierung sind in Tabelle 2 aufgeführt.

### Versuch 5

### Synthese Polyarylenether (P5)

Polyarylenether mit OH-Endgruppen, erhalten durch nucleophile aromatische Polykondensation von 574,16 g (2,000 mol) Dichlordiphenylsulfon, 512,09 g (2,047 mol) Dihydroxydiphenylsulfon, unter Einwirkung von 290,24 g (2,1 mol) Kaliumcarbonat (Pottasche) in 1053 ml NMP. Die Mischung wurde 6 Stunden bei 190°C gehalten. Nach Abkühlen auf weniger als 80°C wurde die Suspension abgelassen, die festen Bestandteile wurden durch Filtration abgetrennt. Der Polyarylenether wurde durch Fällung in NMP/Wasser isoliert. Nach sorgfältigem Waschen mit Wasser wurde der Polyarylenether im Vakuum bei 120°C für 12 h getrocknet. Die Viskositätszahl des Polyarylenethers lag bei 52,4 ml/g, die Glastemperatur bei 224°C, der Anteil an phenolischen OH-Gruppen bei 0,16 Gew.-%. Aus dem Polyarylenether wurde eine 20 Gew% Lösung in NMP hergestellt und die erhaltene Polymerlösung für die Alkoxylierung bereitgestellt.

### Ethoxylierung

### In einem gereinigten und getrockneten Stahlreaktor (einmal mit Isopropanol/Aceton ausgekocht) wurde die Polymerlösung aus Versuch 5 (900 g) vorgelegt, darin 1,19 g KOtBu gelöst und dreimal mit Stickstoff inertisiert. Anschließend wurde der Druck des Reaktors mit Stickstoff auf 1,5 bar eingestellt und die Reaktortemperatur auf 120 °C angehoben. Nach Erreichen der Innentemperatur wurde Ethylenoxid (32 g) innerhalb von 10 Minuten zudosiert. Es wurde 10 h bei 120 °C gerührt und restliches Ethylenoxid durch Einleitung von Stickstoff entfernt. Das Blockcopolymer wurde bei 100 °C ausgeschleust. Die Ausbeute lag bei 930 g.

Das Blockcopolymer wurde durch Fällung in Wasser/NMP bei Raumtemperatur isoliert. Die Ergebnisse der Charakterisierung sind in Tabelle 2 aufgeführt.

### Versuch 6

### Synthese Polyarylenether (P6)

Polyarylenether mit OH-Endgruppen, erhalten durch nucleophile aromatische Polykondensation von 574,16 g (2,000 mol) Dichlordiphenylsulfon, 512,09 g (2,047 mol) Dihydroxydiphenylsulfon, unter Einwirkung von 290,24 g (2,1 mol) Kaliumcarbonat (Pottasche) in 1053 ml NMP. Die Mischung wurde 6 Stunden bei 190°C gehalten. Nach Abkühlen auf weniger als 80°C wurde die Suspension abgelassen, die festen Bestandteile wurden durch Filtration abgetrennt. Der Polyarylenether wurde durch Fällung in NMP/Wasser isoliert. Nach sorgfältigem Waschen mit Wasser wurde der Polyarylenether im Vakuum bei 120°C für 12 h getrocknet. Die Viskositätszahl des Polyarylenethers lag bei 52,4 ml/g, die Glastemperatur bei 224°C, der Anteil an phenolischen OH-Gruppen bei 0,16 Gew.-%. Aus dem Polyarylenether wurde eine 20 Gew.-% Lösung in NMP hergestellt und die erhaltene Polymerlösung für die Alkoxylierung bereitgestellt.

### Ethoxylierung

In einem gereinigten und getrockneten Stahlreaktor (einmal mit Isopropanol/Aceton ausgekocht) wurde die Polymerlösung aus Versuch 4 (900 g) vorgelegt darin 1,19 g KOtBu gelöst und dreimal mit Stickstoff inertisiert. Anschließend wurde der Druck des Reaktors mit Stickstoff auf 1,5 bar eingestellt und die Reaktortemperatur auf 120 °C angehoben. Nach Erreichen der Innentemperatur wurde Ethylenoxid (15 g) innerhalb von 10 Minuten dosiert. Es wurde 10 h bei 120 °C gerührt und restliches Ethylenoxid durch Einleitung von Stickstoff entfernt. Das Blockcopolymer wurde bei 100 °C ausgeschleust. Die Ausbeute betrug 908 g.

Das Produkt wird durch Fällung in Wasser/N M P bei Raumtemperatur isoliert. Die Ergebnisse der Charakterisierung sind in Tabelle 2 aufgeführt.

**Tabelle 2: Blockcopolymere aus den Versuchen 4-6.**

| Versuch | 4 | 5 | 6 |
|---|---|---|---|
| Anteil gebundenes PEO im Blockcopo. [Gew.-%] | 7,8 | 6,9 | 4,8 |
| Tg[°C] | 172 | 189 | 194 |
| Anteil ungebundenes PEO [Gew.-%] | Weniger als 0,1 | Weniger als 0,1 | Weniger als 0,1 |
| Mw [GPC] | 38000 | 40500 | 41000 |
| Mw/Mn | 2,1 | 2,2 | 2,2 |

### Vergleichsversuch 7:

58,5 g eines Polysulfons mit Viskositätszahl 55,6 ml/g und 6,5 g eines Polyethylenglykols mit Mₙ 8000 g/mol, 200 ml DMSO, 65 ml Toluol und 5,6 g Kaliumcarbonat wurden unter Rückfluss 9 h auf 145 °C erhitzt. Zur Isolierung des Produkts wurde die auf Raumtemperatur abgekühlte Lösung unter Rühren mit 100 g Isopropanol, anschlie-βend mit 200 g Hexan versetzt. Das ausgefallene Polymer wurde zweimal mit Wasser gewaschen. Danach wurde das Produkt mit 95 °C heißem Wasser extrahiert. Der Anteil an PEO-Segmenten betrug 3,2 Gew.-% (1H-NMR), die Molekulargewichtsverteilung Mw/Mn (GPC mit THF als Laufmittel, UV-Detektor, PS Standards) lag bei 3,7.

## Patentansprüche

1. Verfahren zur Herstellung eines Blockcopolymers enthaltend Polyarylenether-und Polyalkylenoxid-Blöcke umfassend die Umsetzung eines HO-terminierten Polyarylenethers mit einem monomeren Alkylenoxid.

2. Verfahren nach Anspruch 1 umfassend die Herstellung des HO-terminierten Polyarylenethers in einem ersten Schritt und die Umsetzung dessen gemäß Anspruch 1 in einem zweiten Schritt.

3. Verfahren nach Anspruch 1 oder 2 wobei die Umsetzung in Gegenwart eines Lösungsmittels durchgeführt wird.

4. Verfahren nach mindestens einem der Ansprüche 1 bis 3 wobei die Umsetzung in einem NMP-haltigen Lösungsmittel durchgeführt wird.

5. Verfahren nach mindestens einem der Ansprüche 1 bis 3 wobei als monomeres Alkylenoxid Ethylenoxid, Propylenoxid, 1,2-Butylenoxid, 2,3-Butylenoxid, 1,2-Pentenoxid, 2,3-Pentenoxid und/oder deren Mischungen eingesetzt wird.

6. Blockcopolymer erhältlich nach einem der Ansprüche 1 bis 5.

7. Blockcopolymer nach Anspruch 6, wobei das Verhältnis von Mw/Mn des Blockcopolymers von 1,5 bis 3,0 bestimmt mittels Gelpermeationschromatographie ist.

8. Blockcopolymer nach Anspruch 6 oder 7 wobei das Blockopolymer ein Triblockcopolymer ist.

9. Blockcopolymer nach mindestens einem der Ansprüche 6 bis 8 mit einem Mw von 10.000 bis 90.000 g/mol gemessen mittels GPC.

10. Blockcopolymer nach mindestens einem der Ansprüche 6 bis 9 wobei das Blockcopolymer eine Viskositätszahl von 15 bis 100 aufweist, gemessen in einer 1 %-igen Lösung von N-Methyl-pyrrolidon bei 25°C gemäß DIN EN ISO 1628-1.

11. Blockcopolymer, das ein Triblockpolymer enthaltend Polyalkylenoxid-Polyarylether-Polyalkylenoxid-Blöcke ist.

12. Blockcopolymer nach Anspruch 11 wobei das Verhältnis von Mw/Mn des Triblockcopolymers von 1,5 bis 3,0 bestimmt mittels Gelpermeationschromatographie ist.

13. Formmasse umfassend von 1 bis 60 Gew.-% bezogen auf die Formmasse mindestens eines Blockcopolymers nach den Ansprüchen 6 bis 12.

14. Verwendung mindestens eines Blockcopolymers nach den Ansprüchen 6 bis 12 oder einer Formmasse gemäß Anspruch 13 zur Herstellung von Beschichtungen, Folien, Fasern, Formteilen und/oder Membranen.

15. Membranen enthaltend ein Blockcopolymer nach den Ansprüchen 6 bis 12 oder eine Formmasse nach Anspruch 13.
